# EUROPEAN PATENT SPECIFICATION

(11) **EP 3 858 641 B1**
(45) Date of publication and mention of the grant of the patent: **28.12.2022**
(21) Application number: 21150450.1
(22) Date of filing: 07.01.2021
(51) Int. Cl.: B60C 11/00, B60C 11/13

(54) **PNEUMATIC TIRE**
LUFTREIFEN
PNEUMATIQUE

(30) Priority: 29.01.2020 JP 2020012738
(43) Date of publication of application: 04.08.2021
(73) Proprietor: Sumitomo Rubber Industries, Ltd., Kobe-shi, Hyogo-ken 651-0072 (JP)
(72) Inventor: UOTANI, Ryota, Kobe-shi, Hyogo 651-0072 (JP)
(74) Representative: Manitz Finsterwald Patent- und Rechtsanwaltspartnerschaft mbB

(56) References cited:
- EP-A1- 3 056 355
- DE-A1-102015 212 995
- JP-A- 2015 147 545
- US-A1- 2019 225 022

## Description

### BACKGROUND OF THE INVENTION

### Field of the Invention

The present invention relates to a pneumatic tire.

### Description of the Background Art

For example, JP 2015-74335 A discloses a tire in which the tread surface of a land portion has a shape protruding outward in the tire radial direction.

JP 2015-147545 A discloses a pneumatic tire according to the preamble of claim 1. EP 3 056 355 A1 and DE 10 2015 212 995 A1 disclose pneumatic tires having tread surfaces that are designed to improve noise performance or to avoid tears in a groove bottom.

### SUMMARY OF THE INVENTION

In the case where the tread surface of the land portion has a curved profile protruding outward in the tire radial direction as in the above-described tire, the tread surface has a uniform ground contact pressure distribution, and, particularly, improvement in braking performance can be expected.

However, in the above-described tire, for example, when an applied load is low, an area in which the tread surface is actually in contact with the ground tends to be small, so that an initial response during braking (hereinafter referred to as "initial braking performance") is likely to be degraded. In particular, such a tendency is significant in heavy-duty tires, light truck tires, etc., in which applied load varies greatly and which are used with high internal pressure.

The present invention has been made in view of the aforementioned problem, and a main object of the present invention is to provide a pneumatic tire in which a tread surface of a land portion has a curved profile protruding outward in the tire radial direction, and the initial braking performance is improved.

The present invention is directed to a pneumatic tire including a tread portion. The tread portion includes a first land portion. The first land portion includes an inner edge extending in a tire circumferential direction, an outer edge extending in the tire circumferential direction, and a tread surface between the inner edge and the outer edge. The inner edge is located closer to an equator of the tire than the outer edge is. The tread surface has a curved profile protruding outward in a tire radial direction on a meridian cross-section including a tire rotation axis when the tire is in a normal state in which the tire is mounted on a normal rim at a normal internal pressure and no load is applied to the tire. The profile includes an inner curved portion on the inner edge side and an outer curved portion on the outer edge side. A radius Ri of curvature of the inner curved portion is greater than a radius Ro of curvature of the outer curved portion.

In the tire of the present invention, the radius Ri of curvature is preferably not more than 2.0 times the radius Ro of curvature.

In the tire of the present invention, the profile includes an intermediate curved portion between the inner curved portion and the outer curved portion. A radius Rm of curvature of the intermediate curved portion is greater than the radius Ri of curvature and the radius Ro of curvature.

In the tire of the present invention, the radius Rm of curvature is preferably 2.0 to 3.0 times the radius Ri of curvature.

In the tire of the present invention, the radius Rm of curvature is preferably 2.0 to 3.0 times the radius Ro of curvature.

In the tire of the present invention, a length of the inner curved portion in a tire axial direction is preferably greater than a length of the outer curved portion in the tire axial direction.

In the tire of the present invention, the length of the inner curved portion in the tire axial direction is preferably 10 to 20% of a length of the tread surface in the tire axial direction.

In the tire of the present invention, the length of the outer curved portion in the tire axial direction is preferably 10 to 20% of the length of the tread surface in the tire axial direction.

In the tire of the present invention, the tread portion preferably includes at least two tread reinforcement plies.

In the tire of the present invention, the tread reinforcement plies preferably include a plurality of steel cords.

In the tire of the present invention, the first land portion is preferably a rib continuously extending in the tire circumferential direction.

The tire of the present invention is preferably used at an internal pressure of not less than 300 kPa.

In the tire of the present invention, the first land portion is preferably provided between the equator of the tire and one tread end.

In the tire of the present invention, the first land portion is preferably provided on the equator of the tire.

The tread surface of the first land portion of the pneumatic tire according to the present invention has a curved profile protruding outward in the tire radial direction. The profile includes an inner curved portion on the inner edge side and an outer curved portion on the outer edge side. The radius Ri of curvature of the inner curved portion is greater than the radius Ro of curvature of the outer curved portion. This configuration allows the tire of the present invention to exhibit excellent initial braking performance.

### BRIEF DESCRIPTION OF THE DRAWINGS

FIG. 1 is a meridian cross-sectional view of a tire according to one embodiment of the present invention;
FIG. 2 is an enlarged cross-sectional view of a tread portion in FIG. 1;
FIG. 3 is an enlarged cross-sectional view of a first land portion in FIG. 2;
FIG. 4 is an enlarged view of a first land portion according to another embodiment of the present invention;
FIG. 5 is an enlarged view of a first land portion of comparative example 1; and
FIG. 6 is an enlarged view of a first land portion of comparative example 2.

### DESCRIPTION OF THE PREFERRED EMBODIMENTS

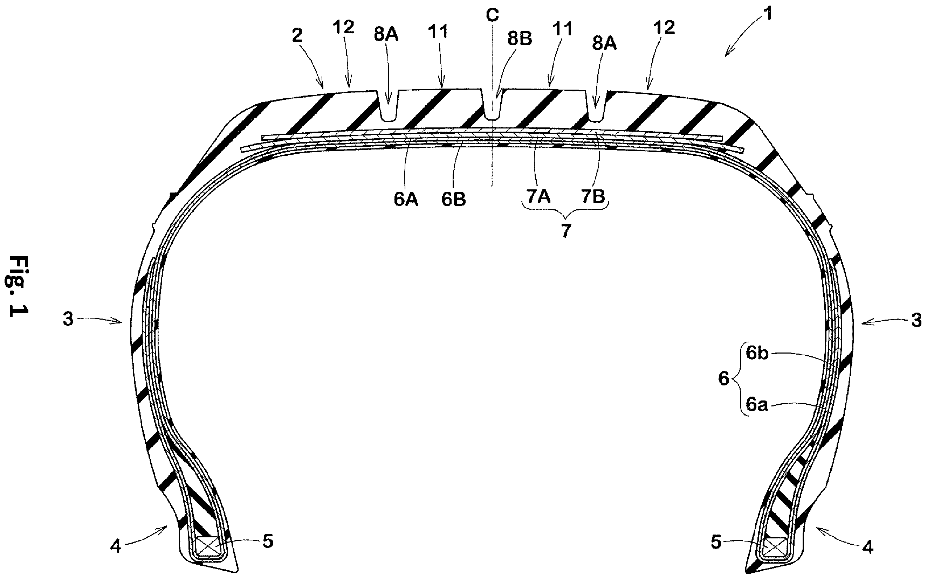

An embodiment of the present invention will be described below with reference to the accompanying drawings. FIG. 1 is a meridian cross-sectional view of a pneumatic tire (hereinafter simply referred to as a "tire") 1 according to one embodiment of the present invention, including the tire rotation axis. As shown in FIG. 1, the tire 1 of the present invention is suitably used for passenger cars, small-sized commercial vans, small-sized trucks, etc. The tire 1 of the present embodiment is a pneumatic tire for passenger cars which may be applicable to pickup trucks. However, the tire of the present invention is not limited to such applications.

FIG. 1 shows the tire 1 in a normal state. The "normal state" represents a state in which the tire is mounted on a normal rim and inflated to a normal internal pressure, and no load is applied to the tire. In the description herein, unless otherwise specified, dimensions of components of the tire, and the like are represented as values measured in the normal state.

The "normal rim" represents a rim that is defined by a standard, in a standard system including the standard with which the tire complies, for each tire, and is, for example, the "standard rim" in the JATMA standard, the "Design Rim" in the TRA standard, or the "Measuring Rim" in the ETRTO standard.

The "normal internal pressure" represents an air pressure that is defined by a standard, in a standard system including the standard with which the tire complies, for each tire, and is the "maximum air pressure" in the JATMA standard, the maximum value recited in the table "TIRE LOAD LIMITS AT VARIOUS COLD INFLATION PRESSURES" in the TRA standard, or the "INFLATION PRESSURE" in the ETRTO standard.

In the case of the tire 1 for which no standards are specified, dimensions and the like are measured with the tire 1 in a standard use state, in the description herein. The "standard use state" means a standard use state of the tire according to the purpose of use under no load.

The tire 1 of the present embodiment includes a tread portion 2, a pair of sidewall portions 3, a pair of bead portions 4 in each of which a bead core 5 is embedded, and a carcass 6 which extends toroidally between the bead portions 4.

The carcass 6 includes, for example, two carcass plies 6A and 6B. The carcass plies 6A and 6B each include a carcass cord, and a topping rubber covering the carcass cord. The carcass cord is, for example, arranged at an angle of 75 to 90° with respect to the tire circumferential direction. For the carcass cord, for example, an organic fiber cord or the like formed from nylon, polyester, rayon, or the like is suitably employed.

The carcass 6 has a body portion 6a and turned-up portions 6b. The body portion 6a extends between the bead cores 5 of the pair of bead portions 4. The turned-up portions 6b, which are continuous with the body portion 6a, are turned up around the respective bead cores 5, extending outward in the tire radial direction. The turned-up portions 6b of the present embodiment are turned up around the respective bead cores 5 from the inner side toward the outer side in the tire axial direction.

The tread portion 2 of the present embodiment includes, for example, a tread reinforcement layer 7. The tread reinforcement layer 7 includes at least two tread reinforcement plies 7A and 7B. Each of the tread reinforcement plies 7A and 7B includes, for example, a plurality of steel cords inclined with respect to the tire circumferential direction, and a topping rubber covering the steel cords. Each steel cord is preferably inclined at an angle of 10 to 45° with respect to the tire circumferential direction.

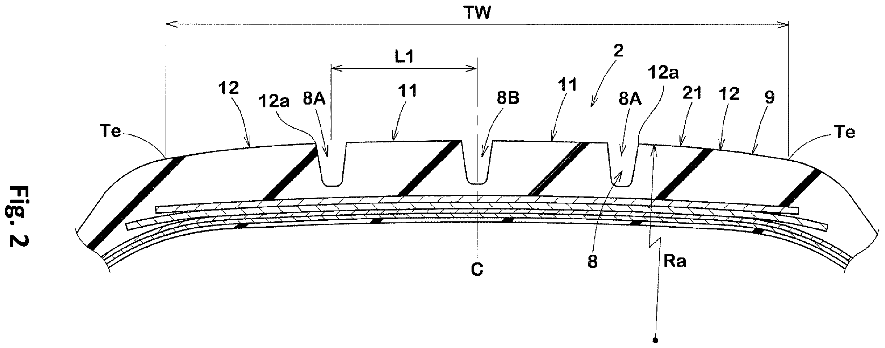

FIG. 2 is an enlarged cross-sectional view of the tread portion 2. As shown in FIG. 2, the tread portion 2 includes a plurality of circumferential grooves 8 continuously extending in the tire circumferential direction between two tread ends Te, and a plurality of land portions 9 demarcated by the grooves 8.

The tread end Te indicates an outermost ground contact position in the tire axial direction in the case where a normal load is applied to the tire 1 in the normal state and the tire 1 is in contact with a flat plane at a camber angle of 0°.

The "normal load" represents a load that is defined by a standard, in a standard system including the standard with which the tire complies, for each tire, and is the "maximum load capacity" in the JATMA standard, the maximum value recited in the table "TIRE LOAD LIMITS AT VARIOUS COLD INFLATION PRESSURES" in the TRA standard, or the "LOAD CAPACITY" in the ETRTO standard.

In the case of a tire for which no standards are specified, the tread end Te refers to an outermost ground contact position in the tire axial direction in the case where a normal use load is applied to the tire in the standard use state and the tire is in contact with a flat plane at a camber angle of 0°. The "normal use load" means a magnitude of load which is normally applied to a tire in actual use.

The circumferential grooves 8 include, for example, first circumferential grooves 8A provided between a tire equator C and each tread end Te, and a second circumferential groove 8B located adjacent to the first circumferential groove 8A on the tire equator C side. In the present embodiment, a single second circumferential groove 8B is provided on the tire equator C, and two first circumferential grooves 8A are provided with the second circumferential groove 8B interposed therebetween. A distance L1 in the tire axial direction from the tire equator C to a groove center line of the first circumferential groove 8A is, for example, 15 to 30% of a tread width TW. The tread width TW refers to the distance in the tire axial direction from one tread end Te to the other tread end Te in the normal state.

For example, the circumferential groove 8 linearly extends in parallel to the tire circumferential direction in a planar view of the tread (not shown). The circumferential groove 8 has a groove width of, for example, 4.0 to 6.0% of the tread width TW. The circumferential groove 8 has a groove depth of, for example, 5 to 10 mm. The circumferential groove 8 having such a structure allows well-balanced improvement of wet performance and steering stability.

The tire 1 of the present embodiment is a 4-rib tire in which the tread portion 2 includes the three circumferential grooves 8 and four land portions 9 demarcated by the circumferential grooves 8 as described above. However, the tire of the present invention is not limited to such a structure.

The land portions 9 include first land portions 11 and second land portions 12. The first land portions 11 are provided between the tire equator C and the respective tread ends Te. Each of the first land portions 11 of the present embodiment is defined between the first circumferential groove 8A and the second circumferential groove 8B. Each of the second land portions 12 is defined between the first circumferential groove 8A and the tread end Te. Thus, the two first land portions 11 are provided with the tire equator C interposed therebetween. In addition, the second land portions 12 are provided on both sides of the two first land portions 11 in the tire axial direction.

Each land portion 9 of the present embodiment is provided as a rib continuously extending in the tire circumferential direction. In other words, no lateral grooves or sipes extend completely across each land portion 9 in the tire axial direction, in the present embodiment. The land portions 9 having such a structure contribute to enhancement of steering stability. However, the present invention is not limited to such a structure.

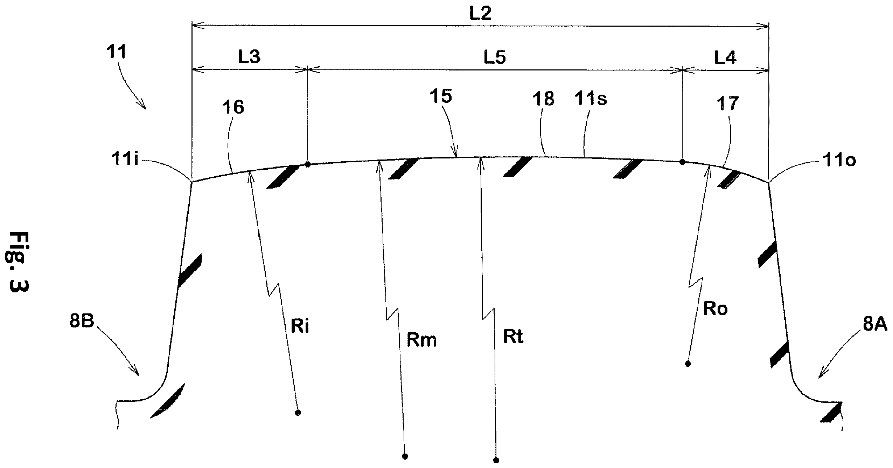

FIG. 3 is an enlarged cross-sectional view of the first land portion 11. The first land portion 11 in FIG. 3 is provided on the right side of the tire equator C in FIG. 2. In FIG. 3, the tread surface of the first land portion 11 described below is shown in an emphasized manner for easy understanding of the present invention. As shown in FIG. 3, the first land portion 11 includes an inner edge 11i extending in the tire circumferential direction, an outer edge 11o extending in the tire circumferential direction, and a tread surface 11s between the inner edge 11i and the outer edge 11o. The inner edge 11i is provided on the tire equator C side and corresponds to a groove edge of the second circumferential groove 8B in the present embodiment. The outer edge 11o is provided on the tread end Te side and corresponds to a groove edge of the first circumferential groove 8A in the present embodiment. Each edge of the present embodiment is a ridge formed between the tread surface and a side surface of the land portion. The edge is defined as an edge of the tread surface in the case where the tire 1 in the normal state is in contact with a flat plane at a camber angle of 0° under the normal load. Therefore, the tread surface and the side surface of the first land portion 11 may be continuous with each other so as to form a curved surface.

On the meridian cross-section including the tire rotation axis in the normal state, the tread surface 11s of the first land portion 11 has a curved profile 15 protruding outward in the tire radial direction. The profile 15 includes an inner curved portion 16 on the inner edge 11i side, and an outer curved portion 17 on the outer edge 11o side. The inner curved portion 16 includes the inner edge 11i side portion and extends toward the outer edge 11o. The outer curved portion 17 includes the outer edge 11o side portion and extends toward the inner edge 11i. A radius Ri of curvature of the inner curved portion 16 is greater than a radius Ro of curvature of the outer curved portion 17. In this structure, the tire of the present invention exhibits excellent initial braking performance. This is considered to be attributed to the following mechanism.

The first land portion 11 having the above-described profile 15 allows the tread surface to have a uniform ground contact pressure distribution, thereby improving braking performance. In addition, the radius Ri of curvature of the inner curved portion 16 is relatively large. Therefore, it is considered that, for example, even when the vehicle is loaded with no cargo, the actual ground contact area of the tread surface is sufficiently assured, thereby exhibiting excellent braking performance. It is also considered that, in the first land portion 11, when the tread surface is in contact with the road surface, the inner edge 11i to which a relatively high ground contact pressure is applied is brought into contact with the road surface earlier than the outer edge is. Thus, it is considered that the inner curved portion 16 to which a relatively high ground contact pressure is applied is brought into contact with the ground early, and, therefore, grip force is generated early, so that excellent initial braking performance is exhibited.

The present embodiment will be described below in more detail. In the present embodiment, a radius Rt of curvature of the entire profile 15 of the tread surface 11s of the first land portion 11 is, for example, 450 to 600 mm. The radius Rt of curvature is equivalent to the radius of curvature of an arc which is most approximate to the entire profile 15. The profile 15 of the tread surface 11s includes an intermediate curved portion 18 between the inner curved portion 16 and the outer curved portion 17. The radius Ri of curvature of the inner curved portion 16, the radius Ro of curvature of the outer curved portion 17, and a radius Rm of curvature of the intermediate curved portion 18 are each, for example, 350 to 500 mm.

The radius Ri of curvature is, for example, not more than 2.0 times and preferably not more than 1.5 times the radius Ro of curvature. Specifically, the radius Ri of curvature is preferably not less than 1.03 times and more preferably not less than 1.05 times the radius Ro of curvature, and preferably not more than 1.20 times and more preferably not more than 1.15 times the radius Ro of curvature. As a result, the above-described effect is assuredly exhibited.

The radius Rm of curvature of the intermediate curved portion 18 is preferably greater than the radius Ri of curvature of the inner curved portion 16. The radius Rm of curvature is, for example, 1.5 to 3.5 times and preferably 2.0 to 3.0 times the radius Ri of curvature. In addition, the radius Rm of curvature of the intermediate curved portion 18 is greater than the radius Ro of curvature of the outer curved portion 17. The radius Rm of curvature is, for example, 1.5 to 3.5 times and preferably 2.0 to 3.0 times the radius Ro of curvature. Thus, the initial braking performance and steering stability are improved in a well-balanced manner.

A length L3 of the inner curved portion 16 in the tire axial direction is, for example, 10 to 20% of a length L2 of the tread surface 11s in the tire axial direction. A length L4 of the outer curved portion 17 in the tire axial direction is, for example, 10 to 20% of the length L2 of the tread surface 11s in the tire axial direction. Thus, uneven wear is reduced near each edge.

In a more preferable manner, the length L3 of the inner curved portion 16 is greater than the length L4 of the outer curved portion 17. Specifically, the length L3 is preferably 1.1 to 2.0 times the length L4.

A length L5 of the intermediate curved portion 18 in the tire axial direction is, for example, preferably greater than the length L3 of the inner curved portion 16 and the length L4 of the outer curved portion 17. The length L5 of the intermediate curved portion 18 is, for example, 50% and preferably 60 to 80% of the length L2 of the tread surface 11s. The intermediate curved portion 18 having such a structure contributes to enhancement of uniformity of the ground contact pressure distribution of the tread surface 11s.

As shown in FIG. 2, the tread surface of the second land portion 12 preferably has a curved profile protruding outward in the tire radial direction with a radius of curvature similar to that of the profile of the first land portion 11. The second land portion 12 includes a longitudinal edge 12a which corresponds to a groove edge of the first circumferential groove 8A. The profile of the tread surface of the second land portion 12 includes a curved portion 21 including the longitudinal edge 12a. A radius Ra of curvature of the curved portion 21 is preferably less than the radius Ri of curvature of the inner curved portion 16 of the first land portion 11. The radius Ra of curvature is preferably less than the radius Ro of curvature of the outer curved portion 17 of the first land portion 11. Thus, the tread surface of the second land portion 12 also has a uniform ground contact pressure distribution, thereby further improving initial braking performance.

The tire 1 of the present embodiment is preferably used in, for example, a vehicle which has a large weight different between when the vehicle is loaded with no cargo and when the vehicle is fully loaded. Therefore, the tire 1 is, for example, used with the internal pressure being not less than 300 kPa when the vehicle is fully loaded.

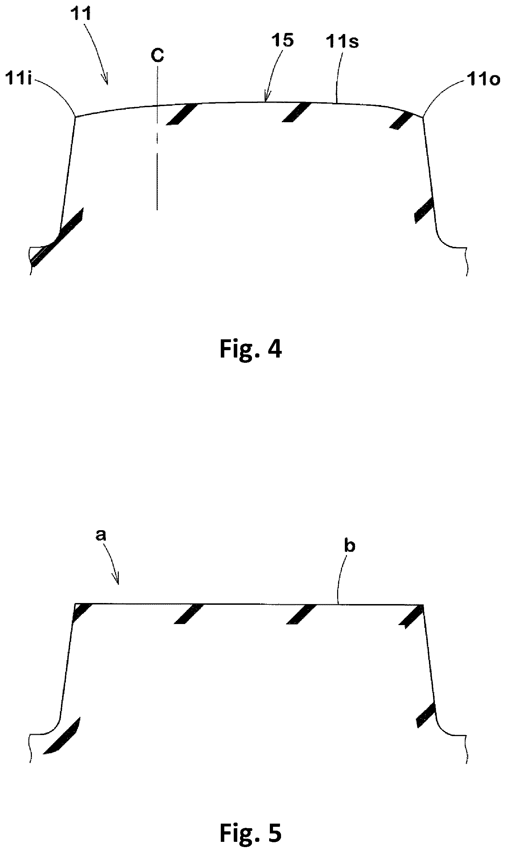

FIG. 4 is an enlarged view of a first land portion 11 according to another embodiment of the present invention. In FIG. 4, the same elements as those in the above-described embodiments are indicated by the same reference characters, and have the same configurations as described above. Therefore, these elements are not described below.

As shown in FIG. 4, the first land portion 11 may be provided on the tire equator C. In such a case, the tire equator C and the center of the first land portion 11 in the tire axial direction are located at different positions in the tire axial direction. An edge of the first land portion 11 closer to the tire equator C is the inner edge 11i, and an edge of the first land portion 11 further from the tire equator C is the outer edge 11o. The first land portion 11 having such a structure also exhibits the above-described effect.

Although the tire according to the embodiments of the present invention has been described above in detail, the present invention is not limited to the above-described specific embodiments, and various modifications can be made to implement the present invention as defined by the appended claims.

### [Examples]

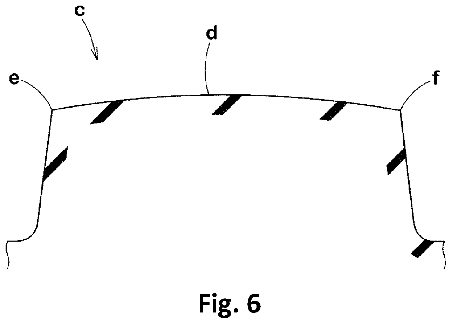

A tire having the size 215/70R16 as shown in FIG. 1 was produced as a test sample. In comparative example 1, as shown in FIG. 5, a tire in which a tread surface b of a first land portion a had a linearly extending profile was produced as a test sample. In comparative example 2, as shown in FIG. 6, a tire in which a tread surface d of a first land portion c had a curved profile protruding outward in the tire radial direction was produced as a test sample. The profile of comparative example 2 was curved from an inner edge e to an outer edge f with a constant radius of curvature, and had no invention-specifying matter of the present invention. The tires of comparative examples 1 and 2 were substantially the same as the tire in FIG. 1, except for the above-described structures. The test tires were tested for initial braking performance and steering stability. Specifications common to the test tires and a testing method are as follows.
Rim on which the tires were mounted: 16 × 6.5 J
Tire internal pressure: 240 kPa
Test vehicle: a four-wheel-drive vehicle having an engine displacement of 2500 cc
Positions at which the tires were mounted: all wheels

### <Initial Braking Performance>

Sensory evaluation was made by a driver for initial braking performance when the above-described test vehicle ran and was braked on a wet road surface. The results are indicated as scores with the score of comparative example 1 for initial braking performance being 100. The greater the score, the better the initial braking performance.

### <Steering Stability>

Sensory evaluation was made by a driver for steering stability when the above-described test vehicle ran on a dry road surface. The results are indicated as scores with the score of the comparative example 1 being 100. The greater the score, the better the steering stability.

The results of the tests are indicated in Table 1.

**[Table 1]**

| | Comp. ex. 1 | Comp. ex. 2 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Figure showing cross-section of first land portion | FIG. 5 | FIG. 6 | FIG. 3 | FIG. 3 | FIG. 3 | FIG. 3 | FIG. 3 | FIG. 3 | FIG. 3 | FIG. 3 | FIG. 3 |
| Radius Ri of curvature/radius Ro of curvature | - | - | 1.10 | 1.03 | 1.05 | 1.15 | 1.20 | 1.10 | 1.10 | 1.10 | 1.10 |
| Length L3 of inner curved portion/length L2 of tread surface (%) | - | - | 18 | 18 | 18 | 18 | 18 | 13 | 15 | 20 | 23 |
| Length L4 of outer curved portion/length L2 of tread surface (%) | - | - | 15 | 15 | 15 | 15 | 15 | 10 | 12 | 18 | 20 |
| Initial braking performance (score) | 100 | 102 | 110 | 108 | 109 | 110 | 109 | 109 | 110 | 110 | 111 |
| Steering stability (score) | 100 | 105 | 105 | 105 | 105 | 104 | 104 | 105 | 105 | 105 | 104 |

According to the results of the tests, it was confirmed that the tires of the examples exhibited excellent initial braking performance. Furthermore, it was also confirmed that steering stability was maintained in the tires of the examples.

## Claims

1. A pneumatic tire (1) comprising
a tread portion (2), wherein
the tread portion (2) includes a first land portion (11),
the first land portion (11) includes an inner edge (11i) extending in a tire circumferential direction, an outer edge (11o) extending in the tire circumferential direction, and a tread surface (11s) between the inner edge (11i) and the outer edge (11o),
the inner edge (11i) is located closer to an equator (C) of the tire (1) than the outer edge (11o),
the tread surface (11s) of the first land portion (11) has a curved profile (15) protruding outward in a tire radial direction on a meridian cross-section including a tire rotation axis when the tire (1) is in a normal state in which the tire (1) is mounted on a normal rim at a normal internal pressure and no load is applied to the tire (1),
the curved profile (15) includes an inner curved portion (16) on the inner edge (11i) side and an outer curved portion (17) on the outer edge (11o) side, and
a radius (Ri) of curvature of the inner curved portion (16) is greater than a radius (Ro) of curvature of the outer curved portion (17),
**characterized in that** the curved profile (15) includes an intermediate curved portion (18) between the inner curved portion (16) and the outer curved portion (17), and
a radius (Rm) of curvature of the intermediate curved portion (18) is greater than the radius (Ri) of curvature of the inner curved portion (16) and greater than the radius (Ro) of curvature of the outer curved portion (17).

2. The pneumatic tire (1) according to claim 1, wherein the radius (Ri) of curvature of the inner curved portion (16) is not more than 2.0 times the radius (Ro) of curvature of the outer curved portion (17).

3. The pneumatic tire (1) according to claim 1 or 2, wherein the radius (Rm) of curvature of the intermediate curved portion (18) is 2.0 to 3.0 times the radius (Ri) of curvature of the inner curved portion (16).

4. The pneumatic tire (1) according to any one of claims 1 to 3, wherein the radius (Rm) of curvature of the intermediate curved portion (18) is 2.0 to 3.0 times the radius (Ro) of curvature of the outer curved portion (17).

5. The pneumatic tire (1) according to any one of claims 1 to 4, wherein a length (L3) of the inner curved portion (16) in a tire axial direction is greater than a length (L4) of the outer curved portion (17) in the tire axial direction.

6. The pneumatic tire (1) according to any one of claims 1 to 5, wherein the length (L3) of the inner curved portion (16) in the tire axial direction is 10 to 20% of a length (L2) of the tread surface (11s) of the first land portion (11) in the tire axial direction.

7. The pneumatic tire (1) according to any one of claims 1 to 6, wherein the length (L4) of the outer curved portion (17) in the tire axial direction is 10 to 20% of the length (L2) of the tread surface (11s) of the first land portion (11) in the tire axial direction.

8. The pneumatic tire (1) according to any one of claims 1 to 7, wherein the tread portion (2) includes at least two tread reinforcement plies (7A, 7B).

9. The pneumatic tire (1) according to claim 8, wherein the tread reinforcement plies (7A, 7B) include a plurality of steel cords.

10. The pneumatic tire (1) according to any one of claims 1 to 9, wherein the first land portion (11) is a rib continuously extending in the tire circumferential direction.

11. The pneumatic tire (1) according to any one of claims 1 to 10, wherein the pneumatic tire (1) is used at an internal pressure of not less than 300 kPa.

12. The pneumatic tire (1) according to any one of claims 1 to 11, wherein the first land portion (11) is provided between the equator (C) of the tire (1) and one tread end (Te).

13. The pneumatic tire (1) according to any one of claims 1 to 11, wherein the first land portion (11) is provided on the equator (C) of the tire (1).

## Patentansprüche

1. Luftreifen (1), der einen Laufflächenabschnitt (2) umfasst, wobei,
der Laufflächenabschnitt (2) einen ersten Landabschnitt (11) aufweist,
wobei der erste Landabschnitt (11) eine innere Kante (11i), die sich in einer Reifenumfangsrichtung erstreckt, eine äußere Kante (11o), die sich in der Reifenumfangsrichtung erstreckt, und eine Laufflächenoberfläche (11s) zwischen der inneren Kante (11i) und der äußeren Kante (11o) aufweist,
die innere Kante (11i) sich näher an einem Äquator (C) des Reifens (1) als die äußere Kante (11o) befindet,
die Laufflächenoberfläche (11s) des ersten Landabschnitts (11) ein gekrümmtes Profil (15) aufweist, das in einer radialen Richtung des Reifens auf einem Meridianquerschnitt, der eine Reifendrehachse einschließt, nach außen vorsteht, wenn sich der Reifen (1) in einem normalen Zustand befindet, in dem der Reifen (1) mit einem normalen Innendruck auf einer normalen Felge aufgezogen ist und keine Last auf den Reifen (1) aufgebracht ist,
das gekrümmte Profil (15) einen inneren gekrümmten Abschnitt (16) auf der Seite der inneren Kante (11i) und einen äußeren gekrümmten Abschnitt (17) auf der Seite der äußeren Kante (11o) aufweist, und
ein Krümmungsradius (Ri) des inneren gekrümmten Abschnitts (16) größer ist als ein Krümmungsradius (Ro) des äußeren gekrümmten Abschnitts (17),
**dadurch gekennzeichnet, dass**
das gekrümmte Profil (15) einen mittleren gekrümmten Abschnitt (18) zwischen dem inneren gekrümmten Abschnitt (16) und dem äußeren gekrümmten Abschnitt (17) aufweist, und
ein Krümmungsradius (Rm) des mittleren gekrümmten Abschnitts (18) größer ist als der Krümmungsradius (Ri) des inneren gekrümmten Abschnitts (16) und größer ist als der Krümmungsradius (Ro) des äußeren gekrümmten Abschnitts (17).

2. Luftreifen (1) nach Anspruch 1, wobei der Krümmungsradius (Ri) des inneren gekrümmten Abschnitts (16) nicht mehr als das 2,0-fache des Krümmungsradius (Ro) des äußeren gekrümmten Abschnitts (17) beträgt.

3. Luftreifen (1) nach Anspruch 1 oder 2, wobei der Krümmungsradius (Rm) des mittleren gekrümmten Abschnitts (18) das 2,0- bis 3,0-fache des Krümmungsradius (Ri) des inneren gekrümmten Abschnitts (16) beträgt.

4. Luftreifen (1) nach einem der Ansprüche 1 bis 3, wobei der Krümmungsradius (Rm) des mittleren gekrümmten Abschnitts (18) das 2,0- bis 3,0-fache des Krümmungsradius (Ro) des äußeren gekrümmten Abschnitts (17) beträgt.

5. Luftreifen (1) nach einem der Ansprüche 1 bis 4, wobei eine Länge (L3) des inneren gekrümmten Abschnitts (16) in einer axialen Richtung des Reifens größer ist als eine Länge (L4) des äußeren gekrümmten Abschnitts (17) in der axialen Richtung des Reifens.

6. Luftreifen (1) nach einem der Ansprüche 1 bis 5, wobei die Länge (L3) des inneren gekrümmten Abschnitts (16) in der axialen Richtung des Reifens 10 bis 20% einer Länge (L2) der Laufflächenoberfläche (11s) des ersten Landabschnitts (11) in der axialen Richtung des Reifens beträgt.

7. Luftreifen (1) nach einem der Ansprüche 1 bis 6, wobei die Länge (L4) des äußeren gekrümmten Abschnitts (17) in der axialen Richtung des Reifens 10 bis 20% der Länge (L2) der Laufflächenoberfläche (11s) des ersten Landabschnitts (11) in der axialen Richtung des Reifens beträgt.

8. Luftreifen (1) nach einem der Ansprüche 1 bis 7, wobei der Laufflächenabschnitt (2) mindestens zwei Laufflächenverstärkungslagen (7A, 7B) umfasst.

9. Luftreifen (1) nach Anspruch 8, wobei die Laufflächenverstärkungslagen (7A, 7B) eine Vielzahl von Stahlkorden umfassen.

10. Luftreifen (1) nach einem der Ansprüche 1 bis 9, wobei der erste Landabschnitt (11) eine Rippe ist, die sich kontinuierlich in der Reifenumfangsrichtung erstreckt.

11. Luftreifen (1) nach einem der Ansprüche 1 bis 10, wobei der Luftreifen (1) bei einem Innendruck von nicht weniger als 300 kPa verwendet wird.

12. Luftreifen (1) nach einem der Ansprüche 1 bis 11, wobei der erste Landabschnitt (11) zwischen dem Äquator (C) des Reifens (1) und einem Laufflächenende (Te) vorgesehen ist.

13. Luftreifen (1) nach einem der Ansprüche 1 bis 11, wobei der erste Landabschnitt (11) auf dem Äquator (C) des Reifens (1) vorgesehen ist.

## Revendications

1. Bandage pneumatique (1) comprenant :
une portion formant bande de roulement (2), dans lequel la portion formant bande de roulement (2) inclut une première portion en relief (11),
la première portion en relief (11) inclut un bord intérieur (11i) qui s'étend dans une direction circonférentielle du pneumatique, un bord extérieur (11o) qui s'étend dans la direction circonférentielle du pneumatique, et une surface de bande de roulement (11s) entre le bord intérieur (11i) et le bord extérieur (11o),
le bord intérieur (11i) est situé plus près d'un équateur (C) du pneumatique (1) que le bord extérieur (11o),
la surface de bande de roulement (11s) de la première portion en relief (11) a un profil incurvé (15) qui se projette à l'extérieur dans une direction radiale du pneumatique sur une section transversale méridienne incluant un axe de rotation de pneumatique quand le pneumatique (1) est dans un état normal dans lequel le pneumatique (1) est monté sur une jante normale à une pression interne normale et qu'aucune charge n'est appliquée sur le pneumatique (1),
le profil incurvé (15) inclut une portion incurvée intérieure (16) sur le côté du bord intérieur (11i) et une portion incurvée extérieure (17) sur le côté du bord extérieur (11o), et
un rayon (Ri) de courbure de la portion incurvée intérieure (16) est plus grand qu'un rayon (Ro) de courbure de la portion incurvée extérieure (17),
**caractérisé en ce que**
le profil incurvé (15) inclut une portion incurvée intermédiaire (18) entre la portion incurvée intérieure (16) et la portion incurvée extérieure (17), et
un rayon (Rm) de courbure de la portion incurvée intermédiaire (18) est plus grand que le rayon (Ri) de courbure de la portion incurvée intérieure (16) et plus grand que le rayon (Ro) de courbure de la portion incurvée extérieure (17).

2. Bandage pneumatique (1) selon la revendication 1, dans lequel le rayon (Ri) de courbure de la portion incurvée intérieure (16) n'est pas plus de 2,0 fois le rayon (Ro) de courbure de la portion incurvée extérieure (17).

3. Bandage pneumatique (1) selon la revendication 1 ou 2, dans lequel le rayon (Rm) de courbure de la portion incurvée intermédiaire (18) est 2,0 à 3,0 fois le rayon (Ri) de courbure de la portion incurvée intérieure (16).

4. Bandage pneumatique (1) selon l'une quelconque des revendications 1 à 3, dans lequel le rayon (Rm) de courbure de la portion incurvée intermédiaire (18) est 2,0 à 3,0 fois le rayon (Ro) de courbure de la portion incurvée extérieure (17).

5. Bandage pneumatique (1) selon l'une quelconque des revendications 1 à 4, dans lequel une longueur (L3) de la portion incurvée intérieure (16) dans une direction axiale du pneumatique est plus grande qu'une longueur (L4) de la portion incurvée extérieure (17) dans la direction axiale du pneumatique.

6. Bandage pneumatique (1) selon l'une quelconque des revendications 1 à 5, dans lequel la longueur (L3) de la portion incurvée intérieure (16) dans la direction axiale du pneumatique est de 10 à 20 % d'une longueur (L2) de la surface de bande de roulement (11s) de la première portion en relief (11) dans la direction axiale du pneumatique.

7. Bandage pneumatique (1) selon l'une quelconque des revendications 1 à 6, dans lequel la longueur (L4) de la portion incurvée extérieure (17) dans la direction axiale du pneumatique est de 10 à 20 % de la longueur (L2) de la surface de bande de roulement (11s) de la première portion en relief (11) dans la direction axiale du pneumatique.

8. Bandage pneumatique (1) selon l'une quelconque des revendications 1 à 7, dans lequel la portion formant bande de roulement (2) inclut au moins deux nappes de renforcement de bande de roulement (7A, 7B).

9. Bandage pneumatique (1) selon la revendication 8, dans lequel les nappes de renforcement de bande de roulement (7A, 7B) incluent une pluralité de câblés en acier.

10. Bandage pneumatique (1) selon l'une quelconque des revendications 1 à 9, dans lequel la première portion en relief (11) est une nervure qui s'étend en continu dans la direction circonférentielle du pneumatique.

11. Bandage pneumatique (1) selon l'une quelconque des revendications 1 à 10, dans lequel le bandage pneumatique (1) est utilisé à une pression interne qui n'est pas inférieure à 300 kPa.

12. Bandage pneumatique (1) selon l'une quelconque des revendications 1 à 11, dans lequel la première portion en relief (11) est prévue entre l'équateur (C) du pneumatique (1) et une extrémité de bande de roulement (Te).

13. Bandage pneumatique (1) selon l'une quelconque des revendications 1 à 11, dans lequel la première portion en relief (11) est prévue sur l'équateur (C) du pneumatique (1).
